(19) Europäisches Patentamt / European Patent Office / Office européen des brevets

(11) **EP 4 289 694 A1**

(12) **EUROPEAN PATENT APPLICATION**

(43) Date of publication:
**13.12.2023  Bulletin 2023/50**

(21) Application number: **22216918.7**

(22) Date of filing: **28.12.2022**

(51) International Patent Classification (IPC):
***B60W 30/18*** *(2012.01)*     ***B60W 50/14*** *(2020.01)*
***B60W 60/00*** *(2020.01)*

(52) Cooperative Patent Classification (CPC):
**B60W 30/18145; B60W 50/14; B60W 60/0059;**
B60W 2520/10; B60W 2552/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **08.06.2022   CN 202210641993**

(71) Applicant: **Zhiji Automotive Technology Co., Ltd.
Shanghai  201210 (CN)**

(72) Inventors:
  • **Chu, Yongqiang
    Shanghai, 201210 (CN)**
  • **He, Jinpeng
    Shanghai, 201210 (CN)**
  • **Ji, Peng
    Shanghai, 201210 (CN)**
  • **Liu, Ting
    Shanghai, 201210 (CN)**
  • **Huang, Liyuan
    Shanghai, 201210 (CN)**

(74) Representative: **Gunzelmann, Rainer
    Wuesthoff & Wuesthoff
    Patentanwälte PartG mbB
    Schweigerstraße 2
    81541 München (DE)**

(54) **METHOD AND APPARATUS FOR ENHANCING TRUST IN INTELLIGENT DRIVING CONTROLLER OF VEHICLE IN CURVE CONTROL**

(57)     The present disclosure provides a method and an apparatus for enhancing trust in an intelligent driving controller of a vehicle in curve control, The method comprises: acquiring a length of a road ahead, a radius of a curve ahead, and a current vehicle speed of the vehicle that are identified by the vehicle; and determining a reliability level of the intelligent driving controller of the vehicle in curve travelling control based on at least one of the length of the road ahead, the radius of the curve ahead, and the current vehicle speed of the vehicle identified.

EP 4 289 694 A1

**Description**

CROSS-REFERENCE TO RELATED APPLICATIONS

This application claims priority to CN Patent Application No. 202210641993.5, filed June 08, 2022 and titled "METHOD AND APPARATUS FOR ENHANCING TRUST IN INTELLIGENT DRIVING CONTROLLER OF VEHICLE IN CURVE CONTROL", the entire contents of which are incorporated by reference herein in their entireties.

TECHNICAL FIELD

The present disclosure provides a method and an apparatus for enhancing trust in an intelligent driving controller of a vehicle in curve control.

BACKGROUND

As rapid development of automobile technology, manual driving has not satisfied daily requirement. Autonomous driving becomes a new trend and is presented to persons in various forms. Industries currently applying autonomous driving technology mainly include freight transportation in closed parks (e.g., docks), cleaning robots in closed parks (e.g., high-technology parks), assistant driving of passenger cars on urban roads, autonomous driving on highways, and autonomous driving of business vehicles on highways.

As rapid development of autonomous driving industries, National Highway Traffic Safety Administration (NHTAS) of the United States has graded autonomous driving as follows:

L0: No Autonomous Driving
L1 ~ L2: Assistance Driving
L3: Autonomous Driving with Driver in Loop
L4 ~ L5: Autonomous Driving

The autonomous driving system may get out of control and exist function due to the sharp curve when entering the curve. Furthermore, the vehicle speed in the curve controlled by the autonomous driving system may be too high, and it cannot be determined whether the system can control the vehicle to pass the curve accurately, which may cause the panic of the driver.

SUMMARY

The present disclosure provides a method and an apparatus for enhancing trust in an intelligent driving controller of a vehicle in curve control.

According to one aspect of the present disclosure, a method for enhancing trust in an intelligent driving controller of a vehicle in curve control comprises:

acquiring a length of a road ahead, a radius of a curve ahead, and a current vehicle speed of the vehicle that are identified by the vehicle; and
determining a reliability level of the intelligent driving controller of the vehicle in curve travelling control based on at least one of the length of the road ahead, the radius of the curve ahead, and the current vehicle speed of the vehicle identified.

In some embodiments, determining the reliability level of the intelligent driving controller of the vehicle in the curve travelling control based on the at least one of the length of the road ahead, the radius of the curve ahead, and the current vehicle speed of the vehicle identified comprises:

determining whether the radius of the curve ahead is less than a first preset radius threshold; and
if the radius of the curve ahead is less than the first preset radius threshold, determining the reliability level of the intelligent driving controller of the vehicle in the curve travelling control according to the at least one of the length of the road ahead, the radius of the curve ahead, and the current vehicle speed of the vehicle identified.

In some embodiments, determining the reliability level of the intelligent driving controller of the vehicle in the curve travelling control according to the at least one of the length of the road ahead, the radius of the curve ahead, and the current vehicle speed of the vehicle identified comprises:

determining whether the identified length of the road ahead is less than a preset length threshold; and
if the identified length of the road head is less than the preset length threshold, lowering the reliability level of the intelligent driving controller of the vehicle in the curve travelling control.

In some embodiments, determining the reliability level of the intelligent driving controller of the vehicle in the curve travelling control according to the at least one of the length of the road ahead, the radius of the curve ahead, and the current vehicle speed of the vehicle identified comprises:

determining whether the identified length of the road ahead is less than a preset length threshold;
if the identified length of the road ahead is greater than or equal to the preset length threshold, determining whether the radius of the curve ahead is less than a second preset radius threshold; and
if the radius of the curve ahead is less than the second preset radius threshold, lowering the reliability level of the intelligent driving controller of the vehicle in the curve travelling control, wherein the first preset radius threshold is greater than the second preset radius threshold.

In some embodiments, determining the reliability level of the intelligent driving controller of the vehicle in the curve travelling control according to the at least one of the length of the road ahead, the radius of the curve ahead, and the current vehicle speed of the vehicle identified comprises:

determining whether the identified length of the road ahead is less than a preset length threshold;
if the identified length of the road ahead is greater than or equal to the preset length threshold, determining whether the radius of the curve ahead is less than a second preset radius threshold; and
if the radius of the curve ahead is greater than or equal to the second preset radius threshold, determining the reliability level of the intelligent driving controller of the vehicle in the curve travelling control based on the radius of the curve ahead and the current vehicle speed of the vehicle, wherein the first preset radius threshold is greater than the second preset radius threshold.

In some embodiments, determining the reliability level of the intelligent driving controller of the vehicle in the curve travelling control according to the radius of the curve ahead and the current vehicle speed of the vehicle comprises:

determining a target vehicle speed of the vehicle when arriving at the curve ahead based on the radius of the curve ahead and the current vehicle speed of the vehicle;
calculating an actual vehicle speed when the vehicle arrives at the curve ahead based on the current vehicle speed of the vehicle and deceleration capacity of the vehicle; and
determining the reliability level of the intelligent driving controller of the vehicle in the curve travelling control based on the actual vehicle speed and the target vehicle speed.

In some embodiments, after calculating the actual vehicle speed when the vehicle arrives at the curve ahead based on the current vehicle speed of the vehicle and the deceleration capacity of the vehicle, the method further comprises:
showing the actual vehicle speed and a motion trail during a preset period while the vehicle arrives at the curve ahead.
In some embodiments, determining the target vehicle speed of the vehicle based on the radius of the curve ahead and the current vehicle speed of the vehicle comprises:

determining the target vehicle speed of the vehicle based on a following formula:

$$v_{lim} = \sqrt{\frac{a}{\rho}}$$

wherein $\rho$ is a curvature of the curve ahead, namely a reciprocal of the radius of the curve ahead; $v_{lim}$ is the target vehicle speed when the vehicle arrives at the curve ahead; $a$ is a lateral acceleration of the vehicle, and a value of $a$ is inversely proportional to the current vehicle speed of the vehicle.

In some embodiments, determining the reliability level of the intelligent driving controller of the vehicle in the curve travelling control based on the actual vehicle speed and the target vehicle speed comprises:

if the actual vehicle speed is less than or equal to the target vehicle speed, determining the reliability of the intelligent driving controller of the vehicle in the curve control as a high level.

In some embodiments, determining the reliability level of the intelligent driving controller of the vehicle in the curve travelling control based on the actual vehicle speed and the target vehicle speed comprises:

if the actual vehicle speed is greater than the target vehicle speed, and the actual vehicle speed is less than or equal to a preset multiple of the target vehicle speed, determining the reliability of the intelligent driving controller of the vehicle in the curve control as a medium level.

In some embodiments, determining the reliability level of the intelligent driving controller of the vehicle in the curve travelling control based on the actual vehicle speed and the target vehicle speed comprises:

if the actual vehicle speed is greater than the target vehicle speed, and the actual vehicle speed is greater than a preset multiple of the target vehicle speed, determining the reliability of the intelligent driving controller of the vehicle in the curve control as a low level.

According to another aspect of the present disclosure, an apparatus for enhancing trust in an intelligent driving controller of a vehicle in curve control is further provided, which comprises:

an acquiring device for acquiring a length of a road ahead, a radius of a curve ahead, and a current vehicle speed of the vehicle that are identified by the vehicle; and
a determining device for determining a reliability level of the intelligent driving controller of the vehicle in curve travelling control based on at least one of the length of the road ahead, the radius of the curve ahead, and the current vehicle speed of the vehicle identified.

According to another aspect of the present disclosure, a computing-based apparatus is further provided, which comprises:

a processor; and
a memory configured to store computer executable instructions, the computer executable instructions cause the processor to perform the method for enhancing trust in the intelligent driving controller of the vehicle in the curve control as above when being executed.

According to another aspect of the present disclosure, a computer readable storage medium is further provided, on which computer executable instructions are stored, wherein the computer executable instructions cause a processor to perform the method for enhancing trust in the intelligent driving controller of the vehicle in the curve control as above when being executed by the processor.

According to another aspect of the present disclosure, a computer program product is further provided, which comprises computer executable instructions, wherein the computer executable instructions cause a processor to perform the method for enhancing trust in the intelligent driving controller of the vehicle in the curve control as above when being executed by the processor.

In the present disclosure, from at least one of the following three dimensions: the length of the road ahead, the radius of the curve ahead and the current vehicle speed of the vehicle, whether the intelligent driving controller can control the vehicle to pass the curve safely in the curve travelling control is decided, the reliability level of the intelligent driving controller of the vehicle in the curve travelling control can be determined, and whether the intelligent driving controller of the vehicle can control the vehicle to pass the curve safely and reliably can be informed to the user accurately so as to avoid the panic of the user.

**BRIEF DESCRIPTION OF THE DRAWINGS**

FIG. 1 is a flowchart of the method for enhancing trust in the intelligent driving controller of the vehicle in the curve control according to an embodiment of the present disclosure.
FIG. 2 is a flowchart of the method for enhancing trust in the intelligent driving controller of the vehicle in the curve control according to a particular embodiment of the present disclosure.
FIG. 3 is a schematic diagram of the apparatus for enhancing trust in the intelligent driving controller of the vehicle in the curve control according to an embodiment of the present disclosure.
FIG. 4 is a schematic diagram of the system for enhancing trust in the intelligent driving controller of the vehicle in the curve control according to an embodiment of the present disclosure.
FIG. 5 is a schematic diagram of showing the trust level according to an embodiment of the present disclosure.
FIG. 6 is a schematic diagram of the corresponding relationship between the actual vehicle speed and the comfortable lateral acceleration according to an embodiment of the present disclosure.

FIG. 7 is a schematic diagram of the location information according to an embodiment of the present disclosure.

FIG. 8 is a schematic diagram of the motion trail and the vehicle speed information according to an embodiment of the present disclosure.

FIG. 9 is a schematic diagram of the corresponding relationship between the vehicle speed and the deceleration according to an embodiment of the present disclosure.

FIG. 10 is a schematic diagram of the corresponding relationship between the vehicle speed and the average brake change rate according to an embodiment of the present disclosure.

## DETAILED DESCRIPTION

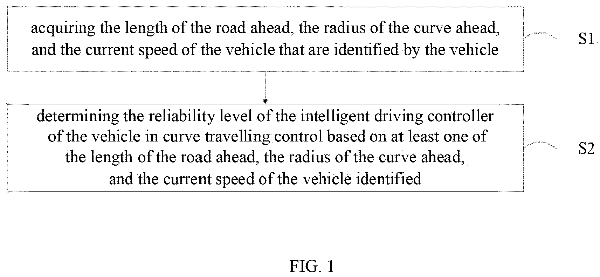

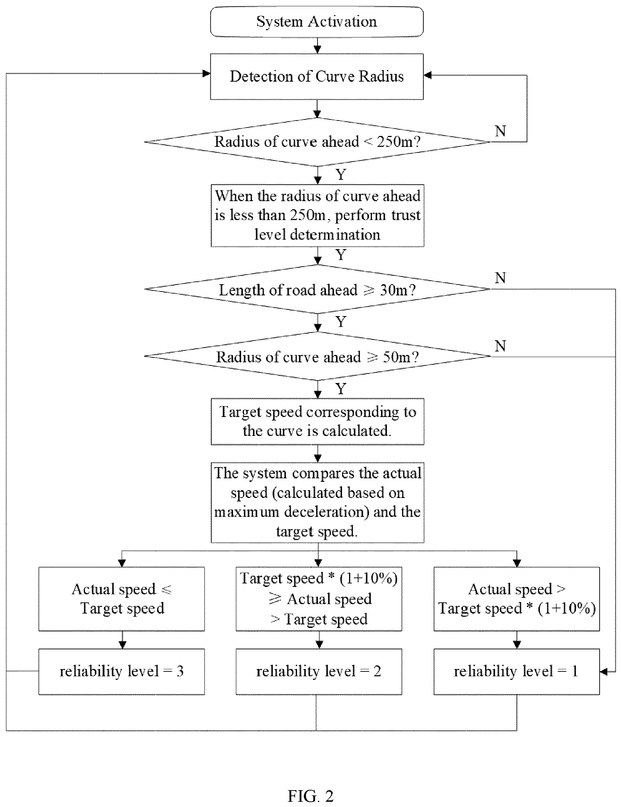

As shown in FIGs. 1 and 2, the present disclosure provides a method for enhancing trust in an intelligent driving controller of a vehicle in curve control, which may include steps S 1 and S2.

Step S 1, acquiring the length of the road ahead, the radius of the curve ahead, and the current vehicle speed of the vehicle that are identified by the vehicle.

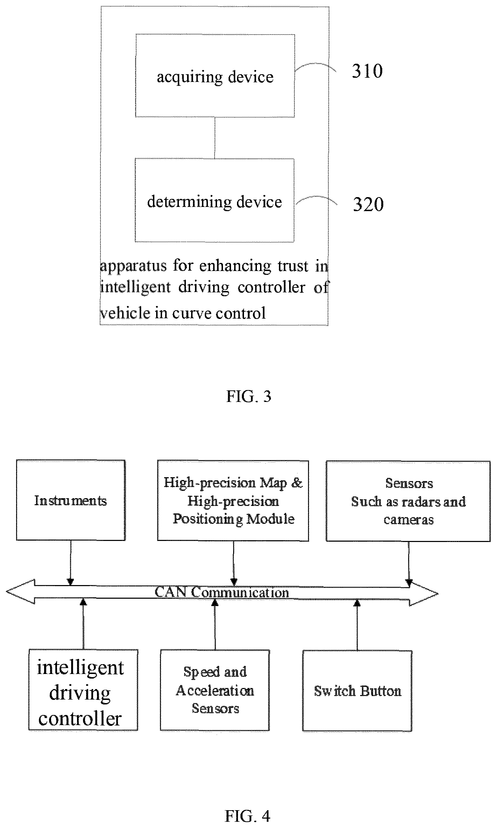

In some embodiments, as shown in FIG. 4, the structure of the intelligent driving system may include the following modules:

1) the switch button for activating the intelligent driving function;

2) the instrument for displaying the contents including the reliability level of the intelligent driving , planning information, and the like;

3) the radar and the camera for acquiring the information of the lane line of the road, the vehicle, and the like;

4) the vehicle speed and acceleration sensors for acquiring the current vehicle speed, and lateral/longitudinal acceleration information;

5) the high precision positioning module for acquiring the current position information of the vehicle, and for acquiring the road ahead information according to the high precision map meanwhile;

6) the intelligent driving controller for controlling the vehicle, and for calculating the reliability and the planning information.

In order to increase the accuracy of perception of the intelligent driving controller, the high precision map of the road (e.g., the highway, the elevated way and the like) may be acquired. The position of the vehicle and the road information may be obtained by the vehicle with the high precision map in corporation with the high precision positioning module, wherein the road information may include the information of the lane line of the road ahead, the radius of the curve, and the like.

Furthermore, the intelligent driving controller may detect the information of the distance from the target vehicle ahead, the speed, and the like, and the lane line information and the radius of the curve in the road by the sensors such as the radar, the camera, and the like installed around the vehicle. Then the intelligent driving controller may calculate the upper limit of the vehicle speed in the curve according to the curve radius information.

In the case that there is a high precision map, the intelligent driving controller may acquire the position of the ego vehicle by the high precision positioning module, and then acquire the curve radius information of the road ahead by the high precision map. In the case that there is not a high precision map, the intelligent driving controller may acquire the current lane line information by the lane line identified by the camera, and then calculate the radius of the curve.

The intelligent driving controller may control the vehicle speed of the ego vehicle, and keep the ego vehicle be in the middle of the lane according to the information of the identified lane line, the target vehicle, and the like, so as to achieve the autonomous driving.

Step S2, determining the reliability level of the intelligent driving controller of the vehicle in curve travelling control based on at least one of the length of the road ahead, the radius of the curve ahead, and the current vehicle speed of the vehicle identified.

Here, in the present disclosure, from at least one of the following three dimensions: the length of the road ahead, the radius of the curve ahead and the current vehicle speed of the vehicle, whether the intelligent driving controller can control the vehicle to pass the curve safely in the curve travelling control may be decided, thereby the reliability level of the intelligent driving controller of the vehicle in the curve travelling control can be determined, so as to accurately inform the user whether the intelligent driving controller of the vehicle can control the vehicle to pass the curve safely and reliably, and to avoid the panic of the user.

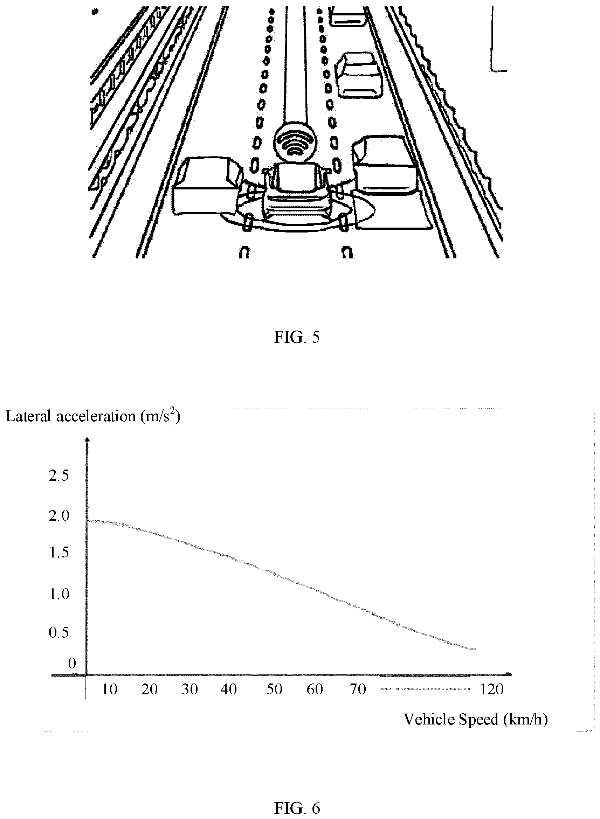

For example, the reliability of the control capacity of the intelligent driving controller of the vehicle may be classified into three levels, wherein the high level represents the high safety capacity of the system, and the intelligent driving controller of the vehicle can control the vehicle to pass the curve safely and steadily; the medium level represents the medium safety capacity of the intelligent driving controller of the vehicle, and the intelligent driving controller can control the vehicle to pass the curve, but it is necessary for the driver to raise the attention simultaneously; the low level represents the low safety capacity of the intelligent driving controller of the vehicle, and the driver should always be ready to take over. The three levels may be displayed on the instrument in the form of icons. FIG.5 shows a schematic diagram in which the reliability is shown as the high level.

As shown in FIG. 2, in some embodiments, step S2 may include:

step S21, determining whether the radius of the curve ahead is less than the first preset radius threshold;
step S22, if the radius of the curve ahead is less than the first preset radius threshold, determining the reliability level of the intelligent driving controller of the vehicle in the curve travelling control according to the at least one of the length of the road ahead, the radius of the curve ahead, and the current vehicle speed of the vehicle identified.

Here, if the radius of the curve is too small, the curve is very sharp, and there is the risk that the intelligent driving controller cannot control the vehicle to pass the curve steadily. For example, in a particular example as shown in FIG. 2, the first preset radius threshold may be 250 m. If it is predicted that there is the curve whose radius is less than 250 m in the road ahead by the high precision map or the camera, then it is necessary to enter the reliability decision logic to inform the user the reliability level of the intelligent driving controller of the vehicle in the curve travel control, so as to increase the confidence of the user. Moreover, if it is predicted that there is the road whose radius is greater than or equal to 250 m in the road ahead by the high precision map or the camera, the reliability decision logic may not be entered, so as to avoid the waste of the computing resource.

As shown in FIG. 2, in some embodiments, step S22 may include:

Step S221, determining whether the identified length of the road ahead is less than the preset length threshold;
Step S222, if the identified length of the road head is less than the preset length threshold, lowering the reliability level of the intelligent driving controller of the vehicle in the curve travelling control.

Specifically, the intelligent driving controller may predict the length of the road ahead. For example, in the case that there is a high precision map, the intelligent driving controller may predict the length of the road ahead by information provided by the high precision map. In a particular example, the high precision map may provide information of the road ahead with the length not less than 2 km. In the case that there is not a high precision map, the intelligent driving controller may identify the lane line by the camera to calculate the curve radius. In this way, if the curve is too sharp, the length of the road ahead which can be identified by the camera is limited. If the length of the road ahead identified is less than the preset length threshold, the reliability level of the intelligent driving controller of the vehicle in the curve travelling control may be lowered to the low level. In a particular example as shown in FIG. 2, the preset length threshold may be 30 m. If the length of the road ahead which can be predicted by the intelligent driving controller is less than 30 m, it indicates that the prediction to the information of the road ahead by the system is not accurate enough, there is the case in which the sharp curve cannot be predicted, and the reliability is lowed to the low level by this time.

In some embodiments, step S22 may further include:

Step S223, if the identified length of the road ahead is greater than or equal to the preset length threshold, determining whether the radius of the curve ahead is less than the second preset radius threshold,
Step S224, if the radius of the curve ahead is less than the second preset radius threshold, lowering the reliability level of the intelligent driving controller of the vehicle in the curve travelling control, wherein the first preset radius threshold is greater than the second preset radius threshold.

In a particular example as shown in FIG. 2, the second preset radius threshold may be 50 m. That is, if the curve radius detected is less than 50 m, it indicates that there is a sharp curve in the road, which may bring the risk that the identification of the motion trail of the surrounding target is inaccurate, and it is easy to get out of control in lateral direction when passing the curve. The reliability can be lowered to the low level as shown in FIG. 1.

In some embodiments, step S22 may further include:

step S225, if the radius of the curve ahead is greater than or equal to the second preset radius threshold, determining the reliability level of the intelligent driving controller of the vehicle in the curve travelling control based on the radius of the curve ahead and the current vehicle speed of the vehicle, wherein the first preset radius threshold is greater than the second preset radius threshold.

In a particular example as shown in FIG. 2, in the case that the length of the road ahead detected is greater than or equal to 30 m, if the radius of the curve is greater than or equal to 50 m, the reliability level of the intelligent driving controller of the vehicle in the curve travelling control may be determined based on the radius of the curve ahead and the current vehicle speed of the vehicle.

In some embodiments, determining the reliability level of the intelligent driving controller of the vehicle in the curve travelling control based on the radius of the curve ahead and the current vehicle speed of the vehicle may include:

Step S2251: determining the target vehicle speed of the vehicle when arriving at the curve ahead based on the radius of the curve ahead and the current vehicle speed of the vehicle;
Step S2252, calculating the actual vehicle speed when the vehicle arrives at the curve ahead based on the current vehicle speed of the vehicle and the deceleration capacity of the vehicle; and
Step S2253, determining the reliability level of the intelligent driving controller of the vehicle in the curve travelling control based on the actual vehicle speed and the target vehicle speed.

Specifically, in order to ensure the comfort, the intelligent driving system may set the maximum deceleration capacity as follows:

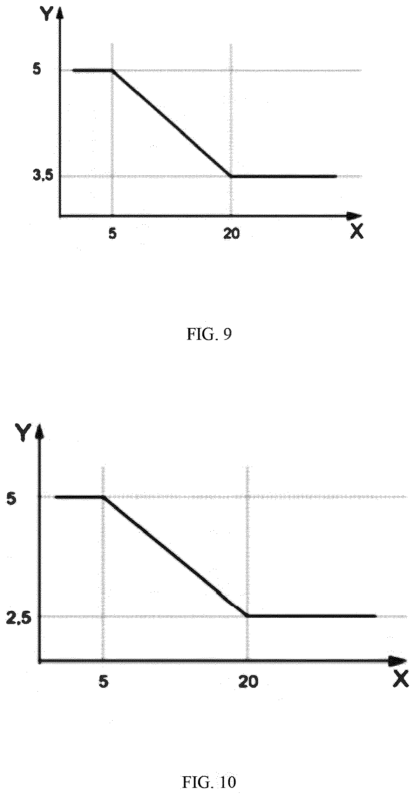

As shown in FIG. 9, the X-axis represents the vehicle speed (m/s) and the Y-axis represents the deceleration (m/s$^2$). When the vehicle speed is greater than 20 m/s, the average deceleration in 2 s should not exceed 3.5 m/s$^2$. When the vehicle speed is less than 5 m/s, the average deceleration in 2 s should not exceed 5 m/s$^2$.
As shown in FIG. 10, the X-axis represents the vehicle speed (m/s) and the Y-axis represents the average brake change rate (m/s$^3$). When the vehicle speed is greater than 20 m/s, the average brake change rate in 1 s should not exceed 2.5 m/s$^3$. When the vehicle speed is less than 5 m/s, the average brake change rate in 1 s should not exceed 5 m/s$^3$.

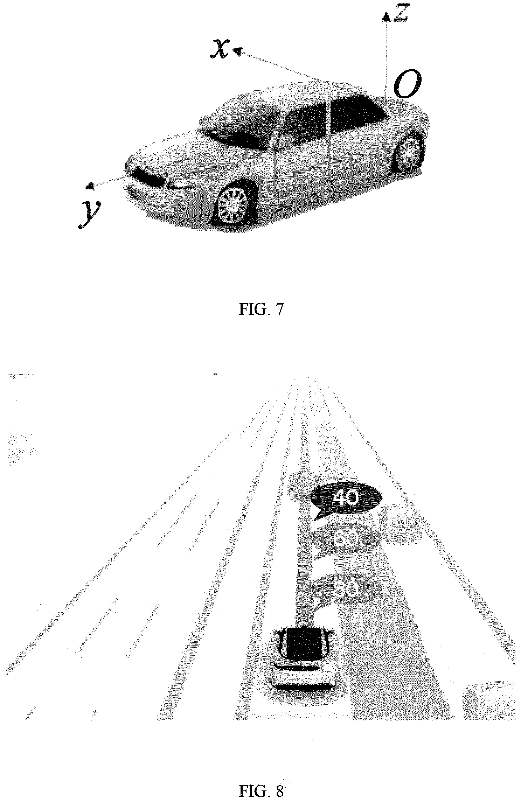

In the present embodiment, the reliability level of the intelligent driving controller in the curve travelling control of the vehicle may be determined efficiently and reliably by deciding whether the actual vehicle speed of the vehicle when arriving at the curve can reach the target vehicle speed in the curve if the intelligent driving controller control the vehicle with the maximum deceleration. If the current vehicle speed is too high, resulting in that the vehicle is not capable of reaching the target vehicle speed in the curve, then there is the risk that the system cannot steadily control the vehicle in the curve.
In some embodiments, after step S2252, the method further includes:
showing the actual vehicle speed and the motion trail during the preset period while the vehicle arrives at the curve ahead.
Specifically, the intelligent driving controller may send the planning controlled trail and planning vehicle speed information in 6 s during the vehicle passes the curve. As shown in FIG. 8, the planning vehicle speed information in 6 s may sequentially be 80 km/h, 60 km/h, and 40 km/h, so as to make the user obtain the planning vehicle speed information of the vehicle which is controlled by the intelligent driving controller in advance, and to improve the user's confidence.
The intelligent driving system may send the planning motion trail and vehicle speed information in 6 s to the instrument for displaying, and the information sent may include the following contents:

| Start point  start point information | Location  location | (X, Y) coordinate |
|---|---|---|
| First second point  first second point information | Location  location | (X, Y) coordinate |
|  | Speed  speed | km/h |
| Second second point  second second point information | Location  location | (X, Y) coordinate |
|  | Speed  speed | km/h |
| ... | ... | ... |
| Sixth second point  sixth second point information | Location  location | (X, Y) coordinate |
|  | Speed  speed | km/h |
| Ego car point  target vehicle location | Location  location | (X,Y) |

In the above table, Start point represents the start point information. In a particular example, Start point represents the position of the center of the head of the ego vehicle after coordinate transformation. Taking the First second point which represents the first second point information as an example, the intelligent driving controller may send the planning motion location and the vehicle speed information after 1 s based on the motion status of the target ahead of the current vehicle. Location represents the location information, wherein the x, y reference coordinate system is as shown in FIG. 7, the origin O is at the center of the backshaft of the vehicle. Location information represents the ego vehicle location information after 1 s. Speed represents the speed for representing the speed information of the vehicle after 1 s calculated by the intelligent driving controller. Ego car point represents the target vehicle position, i.e., the location information of the target vehicle ahead detected by the sensor.

According to the above information, the instrument of the vehicle may display:

> 1) the description of the target vehicle according to the location coordinate information of the target vehicle (Ego car point);
> 2) the description of the vehicle motion trail according to the information of First second point... Sixth second point;
> 3) the vehicle speed information signed on the described vehicle motion trail.

In some embodiments, step S2251 may include:

> determining the target vehicle speed of the vehicle based on a following formula:

$$v_{lim} = \sqrt{\frac{a}{\rho}}$$

> wherein $\rho$ is the curvature of the curve ahead, namely the reciprocal of the radius of the curve ahead; $v_{lim}$ is the target vehicle speed when the vehicle arrives at the curve ahead; $a$ is the lateral acceleration of the vehicle, and the value of $a$ is inversely proportional to the current vehicle speed of the vehicle.

Specifically, in order to ensure the safety and comfort, the maximum lateral acceleration need be limited. The curve radius may be utilized to calculate the maximum longitudinal speed, the computational formula is as follows:

$$v_{lim} = \sqrt{\frac{a}{\rho}}$$

wherein $\rho$ is the curvature of the curve ahead, namely the reciprocal of the radius of the curve ahead; $v_{lim}$ is the maximum longitudinal vehicle speed of the vehicle, that is the target vehicle speed of the vehicle when arriving at the curve ahead; as shown in FIG. 6, $a$ is the lateral acceleration of the vehicle, which is set according to the passing curve lateral acceleration at which the person feels comfortable in the curve, the value of $a$ is related to the current vehicle speed of the vehicle. The greater the current vehicle speed of the vehicle, the smaller the value of a.

As shown in FIG. 2, in some embodiments, step S2253 may include:
if the actual vehicle speed is less than or equal to the target vehicle speed, determining the reliability of the intelligent driving controller of the vehicle in the curve control as the high level.

For example, when it is detected that the length of the road ahead is greater than 30 m and the curve radius is greater than 50 m, the target vehicle speed of the vehicle in the curve may be pre-calculated. Then it can be decided whether the vehicle speed can be reduced to be lower than the target vehicle speed according to the current vehicle speed and the maximum deceleration capacity of the system. If so, the reliability is the high level.

As shown in FIG. 2, in some embodiments, step S2253 may further include:
if the actual vehicle speed is greater than the target vehicle speed, and the actual vehicle speed is less than or equal to the preset multiple of the target vehicle speed, determining the reliability of the intelligent driving controller of the vehicle in the curve control as the medium level.

In a particular example as shown in FIG. 2, the preset multiple may be 1.1. For example, when it is detected that the length of the road ahead is greater than 30 m and the curve radius is greater than 50 m, the target vehicle speed of the vehicle in the curve may be pre-calculated. Then it can be decided whether the vehicle speed can be reduced to be lower than the target vehicle speed when arriving at the curve according to the current actual vehicle speed and the maximum deceleration capacity of the system. If not, but the portion larger than the target vehicle speed does not surpass 10% of the target vehicle speed, the reliability is the medium level.

As shown in FIG. 2, in some embodiments, step S2253 may further include:

if the actual vehicle speed is greater than the target vehicle speed, and the actual vehicle speed is greater than the preset multiple of the target vehicle speed, determining the reliability of the intelligent driving controller of the vehicle in the curve control as the low level.

For example, when it is detected that the length of the road ahead is greater than 30 m and the curve radius is greater than 50 m, the target vehicle speed of the vehicle in the curve may be pre-calculated. Then it can be decided whether the vehicle speed can be reduced to be lower than the target vehicle speed when arriving at the curve according to the current vehicle speed and maximum deceleration capacity of the system. If not, and the portion larger than the target vehicle speed surpasses 10% of the target vehicle speed, the reliability is lowered to be the low level.

According to another aspect of the present disclosure, an apparatus for enhancing trust in an intelligent driving controller of a vehicle in curve control is further provided. As shown in FIG. 3, The apparatus may include:

the acquiring device 310 for acquiring the length of the road ahead, the radius of the curve ahead, and the current vehicle speed of the vehicle that are identified by the vehicle; and
the determining device 320 for determining the reliability level of the intelligent driving controller of the vehicle in the curve travelling control based on at least one of the length of the road ahead, the radius of the curve ahead, and the current vehicle speed of the vehicle identified.

According to another aspect of the present disclosure, a computing-based apparatus is further provided. The computing-based apparatus includes:

the processor; and
the memory configured to store computer executable instructions, the computer executable instructions cause the processor to perform the method for enhancing trust in the intelligent driving controller of the vehicle in the curve control as above when being executed For example, in some embodiments, the computer executable instructions cause the processor to perform the following operations when being executed:

acquiring the length of the road ahead, the radius of the curve ahead, and the current vehicle speed of the vehicle that are identified by the vehicle; and
determining the reliability level of the intelligent driving controller of the vehicle in curve travelling control based on at least one of the length of the road ahead, the radius of the curve ahead, and the current vehicle speed of the vehicle identified.

According to another aspect of the present disclosure, a computer readable storage medium is further provided, on which computer executable instructions are stored, wherein the computer executable instructions cause the processor to perform the method for enhancing trust in the intelligent driving controller of the vehicle in the curve control as above when being executed by the processor. For example, in some embodiments, the executable instructions cause the processor to perform the following operations when being executed:

acquiring the length of the road ahead, the radius of the curve ahead, and the current vehicle speed of the vehicle that are identified by the vehicle; and
determining the reliability level of the intelligent driving controller of the vehicle in curve travelling control based on at least one of the length of the road ahead, the radius of the curve ahead, and the current vehicle speed of the vehicle identified.

According to another aspect of the present application, a computer program product is further provided. The computer program product includes computer executable instructions, wherein the computer executable instructions cause a processor to perform the method for enhancing trust in the intelligent driving controller of the vehicle in the curve control as above when being executed by the processor. For example, in some embodiments, the executable instructions cause the processor to perform the following operations when being executed:

acquiring the length of the road ahead, the radius of the curve ahead, and the current vehicle speed of the vehicle that are identified by the vehicle; and
determining the reliability level of the intelligent driving controller of the vehicle in curve travelling control based on at least one of the length of the road ahead, the radius of the curve ahead, and the current vehicle speed of the vehicle identified.

The details of the embodiments of various apparatuses in the present disclosure may be found in corresponding parts of the embodiments of various methods, and will not be repeated herein.

Apparently, those skilled in the art may change and modify the present application variously without departing from the spirit and the range of the present application. As such, if these change and modify of the present application belong to the range of the claims and their equivalents of the present application, they are intended to be included in the present application.

It should be noted that the present disclosure may be implemented in software and/or in a combination of software and hardware, for example, an application specific integrated circuit (ASIC), a general purpose computer, or any other similar hardware apparatus may be utilized for implementations. In some embodiments, the software program of the present disclosure may be executed by a processor to implement the steps or functions described above. Likewise, the software program (including related data structures) of the present disclosure may be stored in a computer-readable recording medium, for example, RAM memory, magnetic or optical driver, or floppy disk and the similar apparatuses. In addition, some steps or functions of the present disclosure may be implemented by hardware, for example, a circuit that cooperates with a processor to perform various steps or functions.

In addition, a part of the present disclosure may be applied as a computer program product, for example, computer program instructions. When the computer program instructions are executed by a computer, the method and/or technical solution according to the present disclosure may be invoked or provided by the operations of the computer. The program instructions that invoke the method of the present disclosure may be stored in a fixed or removable recording medium and/or transmitted by data stream in broadcast or other signal carrying medium, and/or stored in the work memory of the computer apparatus which is run according to the program instructions. Here, according to some embodiments of the present disclosure, an apparatus is included. The apparatus includes a memory for storing computer program instructions and a processor for executing the program instructions. When the computer program instructions are executed by the processor, the apparatus is triggered to run the methods and/or technical solutions of a plurality of embodiments of the present disclosure describe above.

For those skilled in the art, it is obvious that the present disclosure is not limited to the details of the above mentioned exemplary embodiments, and the present disclosure may be implemented in other specific forms without departing from the spirit or basic features of the present disclosure. Therefore, for all intents, the embodiments should be regarded as exemplary but not restrictive. The scope of the present disclosure is defined by the appended claims rather than the above mentioned description, therefore, all changes fall within the meaning and scope of equivalent elements of the claims should be included in the present disclosure. Any reference numerals in the claims should not be regarded as limits to the involved claims. Additionally, it is obvious that the term "include/comprise" does not exclude other units or steps, and the singular does not exclude the plural. The plurality of units or apparatuses recited in the claims of apparatus may also be implemented by a unit or apparatus by software or hardware. Terms such as first, second, etc. are used to indicate names rather than any specific order.

**Claims**

1. A method for enhancing trust in an intelligent driving controller of a vehicle in curve control, comprising:

   acquiring a length of a road ahead, a radius of a curve ahead, and a current vehicle speed of the vehicle, that are identified by the vehicle; and
   determining a reliability level of the intelligent driving controller of the vehicle in curve travelling control based on at least one of the length of the road ahead, the radius of the curve ahead, and the current vehicle speed of the vehicle identified.

2. The method of claim 1, wherein determining the reliability level of the intelligent driving controller of the vehicle in the curve travelling control based on the at least one of the length of the road ahead, the radius of the curve ahead, and the current vehicle speed of the vehicle identified comprises:

   determining whether the radius of the curve ahead is less than a first preset radius threshold; and
   if the radius of the curve ahead is less than the first preset radius threshold, determining the reliability level of the intelligent driving controller of the vehicle in the curve travelling control according to the at least one of the length of the road ahead, the radius of the curve ahead, and the current vehicle speed of the vehicle identified.

3. The method of claim 2, wherein determining the reliability level of the intelligent driving controller of the vehicle in the curve travelling control according to the at least one of the length of the road ahead, the radius of the curve ahead, and the current vehicle speed of the vehicle identified comprises:

determining whether the identified length of the road ahead is less than a preset length threshold; and
if the identified length of the road head is less than the preset length threshold, lowering the reliability level of the intelligent driving controller of the vehicle in the curve travelling control.

4. The method of claim 2, wherein determining the reliability level of the intelligent driving controller of the vehicle in the curve travelling control according to the at least one of the length of the road ahead, the radius of the curve ahead, and the current vehicle speed of the vehicle identified comprises:

determining whether the identified length of the road ahead is less than a preset length threshold;
if the identified length of the road ahead is greater than or equal to the preset length threshold, determining whether the radius of the curve ahead is less than a second preset radius threshold; and
if the radius of the curve ahead is less than the second preset radius threshold, lowering the reliability level of the intelligent driving controller of the vehicle in the curve travelling control, wherein the first preset radius threshold is greater than the second preset radius threshold.

5. The method of claim 2, wherein determining the reliability level of the intelligent driving controller of the vehicle in the curve travelling control according to the at least one of the length of the road ahead, the radius of the curve ahead, and the current vehicle speed of the vehicle identified comprises:

determining whether the identified length of the road ahead is less than a preset length threshold;
if the identified length of the road ahead is greater than or equal to the preset length threshold, determining whether the radius of the curve ahead is less than a second preset radius threshold; and
if the radius of the curve ahead is greater than or equal to the second preset radius threshold, determining the reliability level of the intelligent driving controller of the vehicle in the curve travelling control based on the radius of the curve ahead and the current vehicle speed of the vehicle, wherein the first preset radius threshold is greater than the second preset radius threshold.

6. The method of claim 5, wherein determining the reliability level of the intelligent driving controller of the vehicle in the curve travelling control according to the radius of the curve ahead and the current vehicle speed of the vehicle comprises:

determining a target vehicle speed of the vehicle when arriving at the curve ahead based on the radius of the curve ahead and the current vehicle speed of the vehicle;
calculating an actual vehicle speed when the vehicle arrives at the curve ahead based on the current vehicle speed of the vehicle and deceleration capacity of the vehicle; and
determining the reliability level of the intelligent driving controller of the vehicle in the curve travelling control based on the actual vehicle speed and the target vehicle speed.

7. The method of claim 6, wherein after calculating the actual vehicle speed when the vehicle arrives at the curve ahead based on the current vehicle speed of the vehicle and the deceleration capacity of the vehicle, the method further comprises:
showing the actual vehicle speed and a motion trail during a preset period while the vehicle arrives at the curve ahead.

8. The method of claim 6, wherein determining the target vehicle speed of the vehicle based on the radius of the curve ahead and the current vehicle speed of the vehicle comprises:

determining the target vehicle speed of the vehicle based on a following formula:

$$v_{lim} = \sqrt{\frac{a}{\rho}}$$

wherein $\rho$ is a curvature of the curve ahead, namely a reciprocal of the radius of the curve ahead; $v_{lim}$ is the

target vehicle speed when the vehicle arrives at the curve ahead; *a* is a lateral acceleration of the vehicle, and a value of *a* is inversely proportional to the current vehicle speed of the vehicle.

9. The method of claim 6, wherein determining the reliability level of the intelligent driving controller of the vehicle in the curve travelling control based on the actual vehicle speed and the target vehicle speed comprises:
if the actual vehicle speed is less than or equal to the target vehicle speed, determining the reliability of the intelligent driving controller of the vehicle in the curve control as a high level.

10. The method of claim 6, wherein determining the reliability level of the intelligent driving controller of the vehicle in the curve travelling control based on the actual vehicle speed and the target vehicle speed comprises:
if the actual vehicle speed is greater than the target vehicle speed, and the actual vehicle speed is less than or equal to a preset multiple of the target vehicle speed, determining the reliability of the intelligent driving controller of the vehicle in the curve control as a medium level.

11. The method of claim 6, wherein determining the reliability level of the intelligent driving controller of the vehicle in the curve travelling control based on the actual vehicle speed and the target vehicle speed comprises:
if the actual vehicle speed is greater than the target vehicle speed, and the actual vehicle speed is greater than a preset multiple of the target vehicle speed, determining the reliability of the intelligent driving controller of the vehicle in the curve control as a low level.

12. An apparatus for enhancing trust in an intelligent driving controller of a vehicle in curve control, comprising:

an acquiring device for acquiring a length of a road ahead, a radius of a curve ahead, and a current vehicle speed of the vehicle, that are identified by the vehicle; and
a determining device for determining a reliability level of the intelligent driving controller of the vehicle in curve travelling control based on at least one of the length of the road ahead, the radius of the curve ahead, and the current vehicle speed of the vehicle identified.

13. A computing-based apparatus, comprising:

a processor; and
a memory configured to store computer executable instructions, the computer executable instructions cause the processor to perform the method for enhancing trust in the intelligent driving controller of the vehicle in the curve control according to any one of claims 1-11 when being executed.

14. A computer readable storage medium, on which computer executable instructions are stored, wherein the computer executable instructions cause a processor to perform the method for enhancing trust in the intelligent driving controller of the vehicle in the curve control according to any one of claims 1-11 when being executed by the processor.

15. A computer program product, comprising computer executable instructions, wherein the computer executable instructions cause a processor to perform the method for enhancing trust in the intelligent driving controller of the vehicle in the curve control according to any one of claims 1-11 when being executed by the processor.

acquiring the length of the road ahead, the radius of the curve ahead, and the current speed of the vehicle that are identified by the vehicle — S1

determining the reliability level of the intelligent driving controller of the vehicle in curve travelling control based on at least one of the length of the road ahead, the radius of the curve ahead, and the current speed of the vehicle identified — S2

FIG. 1

System Activation

Detection of Curve Radius

Radius of curve ahead < 250m? — N

Y

When the radius of curve ahead is less than 250m, perform trust level determination

Y

Length of road ahead ⩾ 30m? — N

Y

Radius of curve ahead ⩾ 50m? — N

Y

Target speed corresponding to the curve is calculated.

The system compares the actual speed (calculated based on maximum deceleration) and the target speed.

| Actual speed ⩽ Target speed | Target speed * (1+10%) ⩾ Actual speed > Target speed | Actual speed > Target speed * (1+10%) |
|---|---|---|
| reliability level = 3 | reliability level = 2 | reliability level = 1 |

FIG. 2

acquiring device — 310

determining device — 320

apparatus for enhancing trust in intelligent driving controller of vehicle in curve control

FIG. 3

| Instruments | High-precision Map & High-precision Positioning Module | Sensors Such as radars and cameras |

CAN Communication

| intelligent driving controller | Speed and Acceleration Sensors | Switch Button |

FIG. 4

FIG. 5

FIG. 6

FIG. 7

FIG. 8

FIG. 9

FIG. 10

Europäisches
Patentamt

European
Patent Office

Office européen
des brevets

**EUROPEAN SEARCH REPORT**

Application Number

EP 22 21 6918

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/155261 A1 (CACCIA DOMINIONI GIANCARLO [BE] ET AL) 27 May 2021 (2021-05-27) * paragraphs [0009], [0019], [0023] * ----- | 1,12-15 | INV. B60W30/18 B60W50/14 B60W60/00 |
| A | DE 10 2019 219263 A1 (CONTINENTAL TEVES AG & CO OHG [DE]) 10 June 2021 (2021-06-10) * paragraphs [0003], [0008], [0009], [0010], [0021] * ----- | 2-12 | |
| A | US 2021/387650 A1 (LI XIAOJIE [US] ET AL) 16 December 2021 (2021-12-16) * paragraph [0048] * ----- | 1,2 | |

| | |
|---|---|
| | TECHNICAL FIELDS SEARCHED (IPC) |
| | B60W |

The present search report has been drawn up for all claims

| Place of search | Date of completion of the search | Examiner |
|---|---|---|
| Munich | 7 August 2023 | Bak, Maciej |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 6918

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2023

| Patent document cited in search report | Publication date | Patent family member(s) | Publication date |
|---|---|---|---|
| US 2021155261 A1 | 27-05-2021 | US 2021155261 A1 <br> WO 2018202318 A1 | 27-05-2021 <br> 08-11-2018 |
| DE 102019219263 A1 | 10-06-2021 | NONE | |
| US 2021387650 A1 | 16-12-2021 | EP 4164932 A1 <br> JP 2023529959 A <br> US 2021387650 A1 <br> WO 2021252084 A1 | 19-04-2023 <br> 12-07-2023 <br> 16-12-2021 <br> 16-12-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210641993